# EUROPEAN PATENT APPLICATION

(11) **EP 4 729 809 A1**
(43) Date of publication of application: **22.04.2026**
(21) Application number: 24206928.4
(22) Date of filing: 16.10.2024
(51) Int. Cl.: F16H 63/32, F16H 57/04, F16H 61/00

(54) **GEAR BOX ACTUATOR FOR AN AUTOMATED MANUAL TRANSMISSION SYSTEM OF A VEHICLE, IN PARTICULAR UTILITY VEHICLE, AUTOMATED MANUAL TRANSMISSION SYSTEM AND VEHICLE**

(71) Applicant: ZF CV Systems Global GmbH, 3006 Bern (CH)
(72) Inventor: ZELEK, Jedrzej, 51-163 WROCLAW (PL)
(74) Representative: Schäferjohann, Volker

(57) **Abstract**

Gear box actuator (100) for an automated manual transmission system (250) of a vehicle (200a), in particular utility vehicle (200b); wherein the gear box actuator (100) comprises a body part (105); the gear box actuator (100) comprises a shift fork (120) to actuate a gear box (260) of the automated manual transmission system (250) by pivoting the shift fork (120); the body part (105) comprises a pivot section (130) for providing a fixed pivot point (131) for pivotally mounting the shift fork (120); the shift fork (120) comprises a bearing surface (125); and the bearing surface (125) of the shift fork (120) and the pivot section (130) of the body part (105) are adapted to provide a sliding contact between each other for pivoting the shift fork (120) relative to the body part (105).

## Description

The disclosure relates to a gear box actuator for an automated manual transmission system of a vehicle, in particular utility vehicle. The disclosure further relates to an automated manual transmission system of a vehicle, in particular utility vehicle, and to a vehicle, in particular utility vehicle.

Automated manual transmission (AMT) systems are known in the prior art. Such an automated manual transmission system may be derived from manually switchable manual transmissions, in which a gearshift linkage or a cable-operated shift device external to the transmission may be replaced by a shift module with hydraulic, pneumatic or electromotive shift actuators and selector actuators.

For example, the publication 815 010 267 3 WABCO AUTOMATED MANUAL TRANSMISSION (AMT) from WABCO GmbH, Juli 2019 (accessible from https://www.wabco-customercentre.com/catalog/docs/8150102673.pdf; last accessed on October 09, 2024) describes several versions of gear box actuators. It is described that, with regard to shafts and gear wheel sets, the AMT is very similar to a standard manual transmission. However, the shift linkage and the manual gear control lever are replaced with an electronically-controlled and electro-pneumatically operated gear changing system. The transmission has twelve forward gears and four reverse gears. The gear control unit consists of two main parts: cover and base. The cover contains: a transmission control unit; a solenoid valve for controlling air cylinders in the base section; a pressure sensor for monitoring supply pressure; and a pneumatic and electrical connections for the gear changing system. The base contains: three of the four shift forks; pneumatic cylinders for moving the shift forks; locking mechanisms which allow the shift forks to engage in the last shifted position; a position sensor for each shift fork; and rotary encoders for the main shaft and countershaft.

EP 3 862 597 A1 relates to a switching module for actuating an automated manual transmission, with at least one switching actuator designed as a hydraulic or pneumatic switching cylinder, the piston rod of which, in the assembled state, is axially fixedly connected to a switching rod designed as a hollow shaft of a switching device inside the transmission, and with a selection actuator designed as a hydraulic or pneumatic selection cylinder, the piston rod of which has a U-shaped receptacle aligned transversely to its longitudinal axis, in which a pivoting lever engages in the assembled state, which is rotationally fixedly connected to a selection rod inside the transmission. To simplify the assembly of the switching module on the manual transmission, it is provided that the pivot lever is assigned to the switching module and is attached in a rotationally fixed manner to the piston rod of the switching cylinder, and that the piston rod of the switching cylinder in the assembled state is axially and rotationally fixedly connected to the selector rod of the manual transmission, which in turn is arranged in the internal transmission selector rod so as to be axially fixed and rotatable about its longitudinal axis.

It is known that one of the shift forks of the gear box actuator, also called switching module, may be pivotable. To enable pivoting the shift fork, it is known to provide to ball bearings. However, during the assembly process, it may occur that one of the bearings does not meet the tolerance, e.g., the bearing is not arranged properly and/or at least partially outside a housing outline. Then, the respective components have to be re-worked. Moreover, the bearings imply weight and cost, by the bearings as such and by the assembly thereof.

In the light of the prior art, the object of the present disclosure is to provide a contribution to the prior art, and to provide a gear box actuator being suitable for improving at least one of the above-mentioned aspects of the prior art, respectively. In particular, it is an object of the disclosure to provide an improved gear box actuator with a pivotable fork which is light-weight, reliable and cost-effective.

The object is solved by the features of the independent claim. The dependent claims have further embodiments of the disclosure as their subject matter.

According to an aspect of the present disclosure, a gear box actuator for an automated manual transmission system of a vehicle, in particular utility vehicle, is provided; wherein the gear box actuator comprises a body part; the gear box actuator comprises a shift fork to actuate a gear box of the automated manual transmission system by pivoting the shift fork; the body part comprises a pivot section for providing a fixed pivot point for pivotally mounting the shift fork; the shift fork comprises a bearing surface; and the bearing surface of the shift fork and the pivot section of the body part are adapted to provide a sliding contact between each other for pivoting the shift fork relative to the body part.

In other words, the disclosure provides a gear box actuator, also called a switching module and/or gear control unit. The gear box actuator comprises the shift fork and the body part. The shift fork may be pivoted relative to the body part to achieve shifting of the gear box. Therein, pivoting may be performed by a sliding contact between the bearing surface of the shift fork and the pivot section of the body part. I.e., the shift fork and the body part may be in direct contact with each other.

By the direct sliding contact between the bearing surface and the pivot section, a ball bearing may be dispensed with. I.e., a rotational movement of the shift fork is directly provided by a contact with the body part. By providing a sliding contact, alignment and/or arrangement problems of ball bearings may be dispensed with. This may make the assembly of the gear box more light-weight and cost-effective. Further, this may improve the quality of the bearing of the shift fork which may enable to provide a more reliable gear box actuator.

Optionally, the bearing surface is an at least partially cylindrical outer surface of the shift fork and the pivot section comprises an at least partially cylindrical inner surface; and the outer surface and the inner surface are in contact with each other. Each of the at least partially cylindrical shapes of the outer surface of the shift fork and of the inner surface of the pivot section defines a rotational axis and enables a rotation of the shift fork around the axis relative to the body part. Therein, the inner surface and the outer surface are adapted to be in sliding contact with each other during a rotational movement, i.e., pivoting, of the shift fork.

Optionally, the pivot section comprises a radial opening. The radial opening enables a lubricant to lubricate the sliding contact between the bearing surface and the pivot section.

Optionally, the radial opening is, in a mounted state of the gear box actuator, adapted to enable a lubricant to flow from a volume encapsulated by the body part and a housing of the automated manual transmission system to the bearing surface. Therein, it is realized that the gear box actuator may be used with an automated manual transmission system with a splash lubrication system, i.e., a system which distributes and/or conveys a lubricant to lubricate the automated manual transmission system. The splash lubrication system may be used in conjunction with a gravitational force to make the lubricant lubricate the sliding contact. This may achieve a reliable lubrication of the pivoting mechanism being provided by the bearing surface and the pivot section.

Optionally, the body part comprises a lubrication channel; and the lubrication channel is adapted to guide a lubricant to the bearing surface. The lubrication channel may be considered as a specific shape of the body part which will allow for an effective application of the lubricant, e.g., oil. To guide a lubricant such as oil to the bearing surface and thus to the sliding contact, the lubrication channel may be oriented, in the mounted state of the automated manual transmission system, downwards towards the bearing surface.

Optionally, the body part comprises two pivot sections; the shift fork comprises two bearing surfaces; and each pair of pivot section and bearing surface defines a rotational axis around which the shift fork is adapted to be pivoted. I.e., the fork is pivotably mounted at two pivot section of the body part. This may enable a particularly reliable, efficient and performant pivoting of the shift fork.

Optionally, the rotational axes are aligned with each other and/or the axes coincide. This may enhance the construction of the gear box and pivoting of the shift fork.

Optionally, the body part comprises a fork actuator; the fork comprises an actuation member for contacting the gear box of the automated manual transmission system; and each of the bearing surface of the shift fork and the pivot section of the body part are arranged between the fork actuator and the actuation member. The arrangement of the bearing surface and the pivot section between the fork actuator and the actuation member provides an efficient deflection of the actuation members which may be balanced with the required performance to enable a reliable shifting.

Optionally, the body part is made of aluminium. This may enable a light-wight body part and thus gear box actuator. Furthermore, the pivot section and optionally the lubrication channel may effectively be manufactured by die casting.

According to an aspect of the disclosure, an automated manual transmission system for a vehicle, in particular utility vehicle, is provided, comprising a gear box and the gear box actuator according to the disclosure. Optionally, the automated manual transmission system comprises one or more optional and/or preferred technical features of the as described with reference to the gear box actuator to achieve a technical effect relating thereto.

Optionally, the automated manual transmission system comprises a split group; and the shift fork is adapted to actuate the split group. The split group may achieve that a certain range of transmission ratio may be split into a plurality of gears which may be selected by the shift fork. The split group provides a particular application of the pivotable shift fork.

Optionally, the automated manual transmission system comprises a splash lubrication system; the body part comprises a lubrication channel for guiding a lubricant to the bearing surface; the lubrication channel is adapted to receive the lubricant from the splash lubrication system. It is realized that the splash lubrication system may be used to lubricate the sliding contact between the bearing surface and the pivot section.

According to an aspect of the disclosure, a vehicle, in particular utility vehicle, is provided, comprising the automated manual transmission system according to the disclosure. Optionally, the vehicle and/or the automated manual transmission system comprises one or more optional and/or preferred technical features of the as described with reference to the gear box actuator and/or to the automated manual transmission system to achieve a technical effect relating thereto.

An embodiment according to an aspect of the present disclosure is described with reference to the Figures below.
Fig. 1 shows schematically a vehicle, in particular utility vehicle, according to an embodiment of the disclosure;
Fig. 2 shows a perspective view of a gear box actuator according to an embodiment of the disclosure;
Fig. 3 shows a detail of a gear box actuator according to an embodiment of the disclosure; and
Fig. 4 shows a detail of a gear box actuator according to an embodiment of the disclosure.

In the following embodiments are described with reference to the Figures, wherein the same reference signs are used for the same objects throughout the description of the Figures and wherein the embodiment is just one specific example for implementing the disclosure and does not limit the scope of the disclosure as defined by the claims.

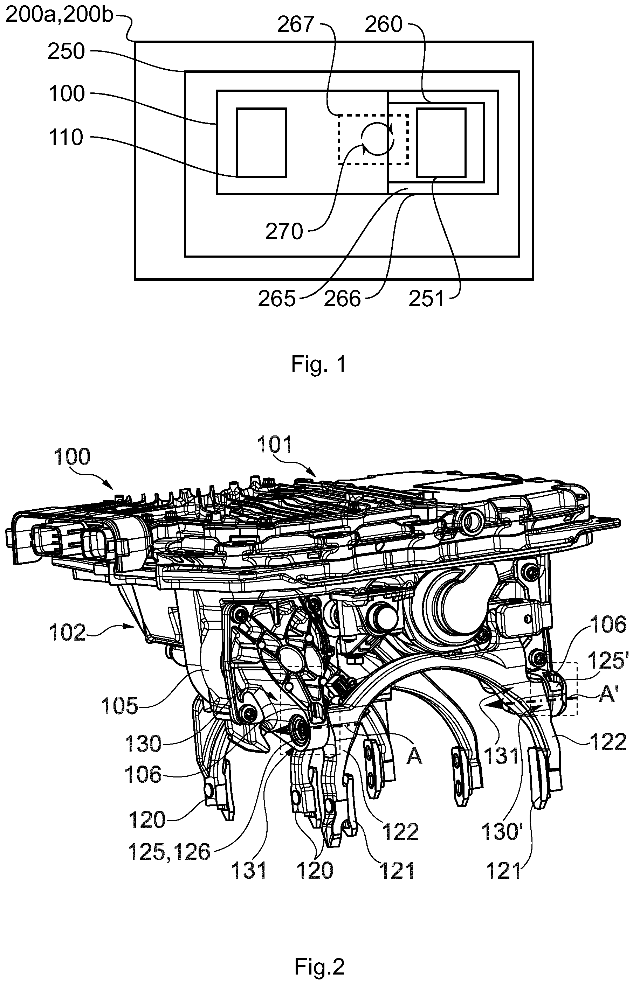

Figure 1 shows schematically a vehicle 200a, in particular utility vehicle 200b, according to an embodiment of the disclosure. In the following the vehicle 200a, in particular utility vehicle 200b, is referred to as vehicle 200a, 200b. The vehicle 200a, 200b is a land vehicle. For example, the vehicle 200a, 200b is a truck, a bus, a towing vehicle and/or a part of a vehicle combination.

The vehicle 200a, 200b comprises an automated manual transmission system 250. The automated manual transmission system 250 is adapted to provide a transmission with a switchable ratio and/or direction in particular for propelling the vehicle 200a, 200b and/or for coupling an engine and/or motor with a drivetrain of the vehicle 200a, 200b and/or with components thereof.

The automated manual transmission system 250 comprises a gear box 260 and a gear box actuator 100. The automated manual transmission system 250 comprises a split group 251. The split group 251 is provided by a particular construction of the gear box 250 and by a functional interaction between the gear box 260 and the gear box actuator 100. Further, the automated manual transmission system 250 comprises further switching groups (not shown), e.g., to enable switching between forward and/or reserve and/or between different transmission ratios.

The automated manual transmission system 250 comprises a splash lubrication system 267 which is indicated schematically in Figure 1. The splash lubrication system 267 is adapted to convey and/or distribute a lubricant 270 within the automated manual transmission system 250. The lubricant 270 is an oil. The lubricant 270 may be, supported by gravity, caused to be collected in a so-called swamp. The splash lubrication system 267 is adapted to convey the lubricant 270 from the swamp to lubricate components of the automated manual transmission system 250.

Further features of the gear control unit 100 and the automated manual transmission system 250 are described with reference to Figures 2 to 4.

Figure 2 shows a perspective view of a gear box actuator 100 according to an embodiment of the disclosure. The gear box actuator 100 of Figure 2 is a gear box actuator 100 for an automated manual transmission system 250 of a vehicle 200a, in particular utility vehicle 200b. Such a vehicle 200a, 200b, such an automated manual transmission system 250 and features of such a gear box actuator 100 are described with reference to Figure 1. Figure 2 is described under reference to Figure 1.

The gear box actuator 100 comprises two main parts: a cover 101 and a base 102. The cover 101 comprises (each not indicated): a transmission control unit, a solenoid valve for controlling pneumatic cylinders in the base 102, a pressure sensor for monitoring supply pressure, and a pneumatic and electrical connections for the gear box actuator 100.

The base 102 comprises: three of for example four shift forks 120, a body part 105 with pneumatic cylinders as fork actuators 110 (see schematically Figure 1) for moving the shift forks 120, locking mechanisms which allow the shift forks 120 to engage in the last shifted position, a position sensor for each shift fork 120, and rotary encoders for the main shaft and countershaft.

The shift forks 120 are adapted to actuate the gear box 260 of the automated manual transmission system 250 by pivoting one of the shift forks 120 (in Figure 2, the shift fork 120 in the front is adapted to be pivoted). The pivotable shift fork 120 is adapted to actuate the split group 251. The pivotable shift fork 120 is drivable by a push rod of one of the fork actuators 110.

For pivoting the shift fork 120 relative to the body part 105 the body part 105 comprises a pivot section 130. The pivot section 130 is adapted to provide a fixed pivot point 131 for pivotally mounting the shift fork 120. The pivot section 130 defines a part of the body part 105 at which the shift fork 120 is rotatably mounted. The pivot point 131 defines an axis A, A' around which the shift fork 120 is adapted to be rotated.

The shift fork 120 comprises a bearing surface 125. The bearing surface 125 is an at least partially cylindrical outer surface 126 of the shift fork 120. In the shown examples, the bearing surface 125 is a circumferentially cylindrical outer surface 126 of the shift fork 120. The bearing surface 125 is formed by a cylinder-shaped protrusion that is integrally formed with a lever 122 of the shift fork 120.

The bearing surface 125 of the shift fork 120 and the pivot section 130 of the body part 105 are adapted to provide a sliding contact between each other for pivoting the shift fork 120 relative to the body part 105. Therein, the pivot section 130 comprises an at least partially cylindrical inner surface 132. The outer surface 126 of the shift fork 120 and the inner surface 132 of the body part 105 are in contact with each other. The diameter of the inner surface 132 and the diameter of the outer surface 126 are adapted to achieve a pivotable mounting of the shift fork 120 relative to the body part 105.

The body part 105 comprises two pivot sections 130, 130'. The shift fork 120 comprises two bearing surfaces 125, 125'. Thus, the two pivot sections 130, 130' and the two bearing surfaces 125, 125' comprises a pair first pair of pivot section 130 and bearing surface 125 and a second pair of pivot section 130' and bearing surface 125', wherein each of the first pair and the second pair defines a rotational axis A, A' around which the shift fork 120 is adapted to be pivoted. In other words, each pair of pivot section 130, 130' and bearing surface 125, 125' defines a rotational axis A, A' around which the shift fork 120 is adapted to be pivoted.

The rotational axes A, A' are aligned with each other and/or the axes A, A' coincide. I.e., each of the rotational axes A, A' define a pivot point 131 around which the shift fork 120 is pivotable; and the pivot points 131 are arranged along the axes A, A'.

The fork 120 comprises an actuation member 121 for contacting the gear box 260 of the automated manual transmission system 250. The actuation member 121 is arranged at an end of the lever 122 of the shift fork 120. Each of the bearing surface 125 of the shift fork 120 and the pivot section 130 of the body part 105 are arranged between the fork actuator 110 and the actuation member 121. Therein, lever mechanism is provided. A first part of the lever mechanism is provided between the fork actuator 110 and the pivot point 131, i.e., the bearing surface 125 and the pivot section 130. A second part of the lever mechanism is provided by a length of the lever 122, i.e., a distance between pivot point 131 and the actuation member 121.

The body part 105 is made of aluminium. I.e., each of the pivot section 130 and its inner surface 132 is made of aluminium.

In the mounted state, the gear box actuator 100 is mounted to a housing 266 (see schematically in Figure 1), i.e., the body part 105 is attached to the housing 266 and the housing 266 encases, i.e., encapsulates, the shift forks 120, the gear box 260 and a volume 265.

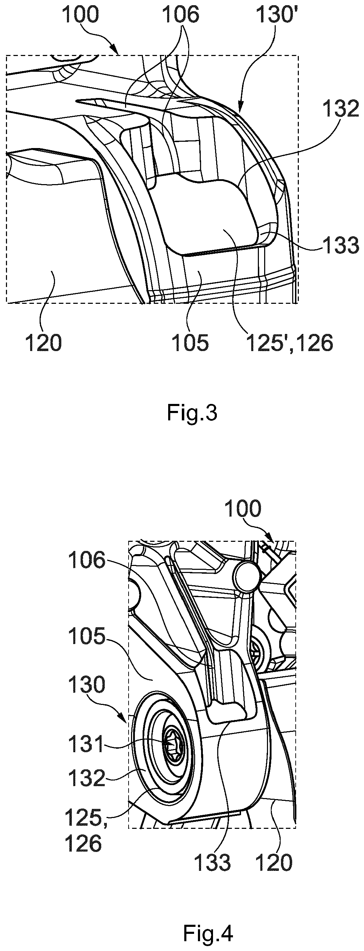

Figure 3 shows a detail of a gear box actuator according 100 to an embodiment of the disclosure. The gear box actuator 100 of Figure 3 is the gear box actuator 100 of Figure 2. Figure 3 is described under reference to Figures 1 and 2.

The pivot section 130' comprises a radial opening 133. I.e., the opening 133 is arranged at a circumferentially extended face of the pivot section 130' so that the bearing surface 125', i.e., the outer surface 126, is uncovered, i.e., not entirely covered by the pivot section 130'. The radial opening 133 is, in a mounted state of the gear box actuator 100, adapted to enable a lubricant 270 to flow from a volume 265 to the bearing surface 125. Thus, the opening 133 enables the lubricant 270 to lubricate the sliding contact between the shift fork 120 and the body part 105.

The body part 105 comprises a lubrication channel 106. The lubrication channel 106 is adapted to guide a lubricant 270 to the bearing surface 125. The lubrication channel 106 is adapted to receive the lubricant 270 from the splash lubrication system 267. I.e., the lubrication channel 106 is adapted to conduct the lubricant 270 downwards from a top of the body part 105 to the bearing surface 125.

The opening 133 and the lubrication channel 106 are manufacturable by die casting during the manufacture of the body part 105.

Figure 4 shows a detail of a gear box actuator 100 according to an embodiment of the disclosure. The gear box actuator 100 of Figure 4 is the gear box actuator 100 of Figures 2 and 4. Figure 4 is described under reference to Figures 1 to 3.

The pivot section 130 comprises a radial opening 133. I.e., the opening 133 is arranged at a circumferentially extended face of the pivot section 130 so that the bearing surface 125, i.e., the outer surface 126, is uncovered, i.e., not entirely covered by the pivot section 130. The radial opening 133 is, in a mounted state of the gear box actuator 100, adapted to enable a lubricant 270 to flow from a volume 265 to the bearing surface 125. Thus, the opening 133 enables the lubricant 270 to lubricate the sliding contact between the shift fork 120 and the body part 105.

### List of reference sign (part of the description)

- 100: gear box actuator
- 101: cover
- 102: base
- 105: body part
- 106: lubrication channel
- 110: fork actuator
- 120: shift fork
- 121: actuation member
- 122: lever
- 125: bearing surface
- 125': bearing surface
- 126: outer surface
- 130: pivot section
- 130': pivot section
- 131: pivot point
- 132: inner surface
- 133: radial opening

- 200a: vehicle
- 200b: utility vehicle

- 250: automated manual transmission system
- 251: split group
- 260: gear box
- 265: volume
- 266: housing
- 267: splash lubrication system
- 270: lubricant

- A: axis
- A': axis

## Claims

1. Gear box actuator (100) for an automated manual transmission system (250) of a vehicle (200a), in particular utility vehicle (200b); wherein
- the gear box actuator (100) comprises a body part (105);
- the gear box actuator (100) comprises a shift fork (120) to actuate a gear box (260) of the automated manual transmission system (250) by pivoting the shift fork (120);
- the body part (105) comprises a pivot section (130) for providing a fixed pivot point (131) for pivotally mounting the shift fork (120);
- the shift fork (120) comprises a bearing surface (125); and
- the bearing surface (125) of the shift fork (120) and the pivot section (130) of the body part (105) are adapted to provide a sliding contact between each other for pivoting the shift fork (120) relative to the body part (105).

2. Gear box actuator (100) as claimed in claim 1, wherein
- the bearing surface (125) is an at least partially cylindrical outer surface (126) of the shift fork (120) and the pivot section (130) comprises an at least partially cylindrical inner surface (132); and
- the outer surface (126) and the inner surface (132) are in contact with each other.

3. Gear box actuator (100) as claimed in claim 1 or 2, wherein
- the pivot section (130) comprises a radial opening (133).

4. Gear box actuator (100) as claimed in claim 3, wherein
- the radial opening (133) is, in a mounted state of the gear box actuator (100), adapted to enable a lubricant (270) to flow from a volume (265) encapsulated by the body part (105) and a housing (266) of the automated manual transmission system (250) to the bearing surface (125).

5. Gear box actuator (100) as claimed in any one of the preceding claims, wherein
- the body part (105) comprises a lubrication channel (106); and
- the lubrication channel (106) is adapted to guide a lubricant (270) to the bearing surface (125).

6. Gear box actuator (100) as claimed in any one of the preceding claims, wherein
- the body part (105) comprises two pivot sections (130, 130');
- the shift fork (120) comprises two bearing surfaces (125, 125'); and
- each pair of pivot section (130, 130') and bearing surface (125, 125') defines a rotational axis (A, A') around which the shift fork (120) is adapted to be pivoted.

7. Gear box actuator (100) as claimed in any one of the preceding claims, wherein
- the rotational axes (A, A') are aligned with each other and/or the axes (A, A') coincide.

8. Gear box actuator (100) as claimed in any one of the preceding claims, wherein
- the body part (105) comprises a fork actuator (110);
- the fork (120) comprises an actuation member (121) for contacting the gear box (260) of the automated manual transmission system (250); and
- each of the bearing surface (125) of the shift fork (120) and the pivot section (130) of the body part (105) are arranged between the fork actuator (110) and the actuation member (121).

9. Gear box actuator (100) as claimed in any one of the preceding claims, wherein
- the body part (105) is made of aluminium.

10. Automated manual transmission system (250) for a vehicle (200a), in particular utility vehicle (200b), comprising a gear box (260) and the gear box actuator (100) as claimed in any one of the preceding claims.

11. Automated manual transmission system (250) as claimed in claim 10, wherein
- the automated manual transmission system (250) comprises a split group (251); and
- the shift fork (120) is adapted to actuate the split group (251).

12. Automated manual transmission system (250) as claimed in claim 10 or 11, wherein
- the automated manual transmission system (250) comprises a splash lubrication system (267);
- the body part (105) comprises a lubrication channel (106) for guiding a lubricant (270) to the bearing surface (125);
- the lubrication channel (106) is adapted to receive the lubricant (270) from the splash lubrication system (267).

13. Vehicle (200a), in particular utility vehicle (200b), comprising the automated manual transmission system (250) as claimed in any one of the preceding claims 10 to 12.
